# EUROPÄISCHE PATENTSCHRIFT

(11) **EP 4 097 034 B1**
(45) Veröffentlichungstag und Bekanntmachung des Hinweises auf die Patenterteilung: **27.11.2024**
(21) Anmeldenummer: 20837942.0
(22) Anmeldetag: 15.12.2020
(51) Int. Cl.: B65G 43/02, G01L 5/16, B65G 43/04

(54) **GURTFÖRDERER MIT EINER SENSORVORRICHTUNG UND SENSORVORRICHTUNG UND VERFAHREN FÜR DIE ERFASSUNG VON BETRIEBSZUSTÄNDEN VON TRAGROLLEN**
BELT CONVEYOR HAVING A SENSOR APPARATUS AND SENSOR APPARATUS AND METHOD FOR DETECTING OPERATING STATES OF LOAD-BEARING ROLLERS
TRANSPORTEUR À COURROIE COMPORTANT UN APPAREIL DE DÉTECTION ET APPAREIL DE DÉTECTION ET PROCÉDÉ DE DÉTECTION D'ÉTATS DE FONCTIONNEMENT DE ROULEAUX DE SUPPORT DE CHARGE

(30) Priorität: 28.01.2020 DE 102020101941
(43) Veröffentlichungstag der Anmeldung: 07.12.2022
(73) Patentinhaber: Voith Patent GmbH, 89522 Heidenheim (DE)
(72) Erfinder: ZIEGLER, Manfred, 50374 Erftstadt (DE); BÄUMLER, Manfred, 70736 Fellbach (DE); BÖKER, Uwe, 71404 Korb (DE)
(86) Internationale Anmeldenummer: PCT/EP2020/086146
(87) Internationale Veröffentlichungsnummer: WO 2021/151577

(56) Entgegenhaltungen:
- EP-A1- 2 386 505
- JP-A- 2010 189 168
- US-A- 4 911 023

## Beschreibung

Die Erfindung betrifft einen Fördergurt, einen Gurtförderer, ein Verfahren zum Betrieb eines Gurtförderers und eine Sensoreinheit für die Erfassung von Betriebszuständen von Tragrollen.

Im Bergbau und insbesondere bei den Betreibern von Bergbauförderanlagen ist weltweit das Thema "Zustand der Tragrollen" ein wichtiger Punkt in Bezug auf Instandhaltung und Verfügbarkeit der Anlagen. Hinzu kommt das Risiko einer Zerstörung des Gurtes durch geschädigte oder schadhafte Tragrollen.

In den letzten Jahren wurden einige Versuche unternommen, durch Ausrüstung der Tragrollen mit Mess- und Übertragungstechnik und Energieversorgung einen Defekt von einzelnen Tragrollen frühzeitig zu erkennen. Derartige Tragrollen sind beispielsweise aus der CN10960709A und CN109573519 bekannt.

In der CN109625843 sind ein System zur Erfassung eines Tragrollenzustandes und ein Monitoring mit einer zentralen Datenerfassung beschrieben.

Es ist bereits bekannt, durch in dem Fördergurt angeordneten Piezoelementen oder aus Vibrationen elektrische Energie zu gewinnen, so dass in dem Gurt eingebetteten Komponenten über eigenständige Energieversorgung verfügen.

Die Herausforderungen und auch die Hemmschwelle angesichts der erforderlichen Investitionen sind dabei sehr hoch:
Die Ausrüstung mit intelligenten Tragrollen ist gleichbedeutend mit der Neubestückung der Anlage mit Tragrollen. Hinzu kommt, dass für die Erfassung der Informationen von intelligenten Tragrollen eine Infrastruktur erforderlich ist. Eine umfangreiche Infrastruktur entlang der Förderwege ist erforderlich, um die Daten aller Tragrollen zu einem zentralen Auswerte- und Informationssystem zu übertragen.

Bedingt durch spezifische Materialeigenschaften des Fördergutes und Kontaminierung des Förderweges ist es häufig nicht möglich, eine Funkübertragung zwischen Tragrollen zuverlässig bereitzustellen. Eine Übertragung über mehrere Tragrollen hinweg zu stationären Komponenten wird dadurch schwierig. Mit einer Erhöhung der Anzahl an stationären Komponenten hingegen steigen die Kosten erheblich.

In der EP 1 877 330 B1 "VERFAHREN ZUR ÜBERWACHUNG DER BANDAUSRICHTUNG UND/ODER DES BANDLAUFS EINER GURTBANDFÖRDEREINRICHTUNG SOWIE GURTBANDFÖRDERER" ist eine andere Anordnung beschrieben. Es werden nicht die Tragrollen selbst ausgerüstet, sondern eine geeignete Sensorik in den Gurt eingebracht. Diese soll bei dem Überlaufen der Tragrollen den Kontaktzustand zwischen Tragrolle und Gurt erfassen und dann durch geeignete Auswertung und Interpretation der Sensordaten den Leistungseintrag in die Tragrolle messen.

Aus der EP 716 991 ist ein Verfahren und Anordnung zur Überwachung eines Fördergurtes bekannt. Dafür sind in dem Gurt Transponderchips mit einer individuellen Kennung angeordnet. In diesen Transponderchips werden weitere Informationen in einem EEPROM Speicher abgelegt.

US 4,911,023 offenbart eine Sensorvorrichtung mit einem ersten Sensor und einem zweiten um 180° gedreht angeordneten Sensor, wobei der erste Sensor und der zweite Sensor beabstandet voneinander angeordnet sind und zwischen den beiden Sensoren eine Verdickung angeordnet ist.

Der Erfindung lag die Aufgabe zu Grunde, die erforderliche Infrastruktur für eine Tragrollenüberwachung zu vereinfachen.

Die Aufgabe wird durch die Vorrichtung mit den Merkmalen gemäß Anspruch 1 gelöst. Weitere vorteilhafte Merkmale sind in den abhängigen Ansprüchen genannt.

Erfindungsgemäß zeichnet sich die Sensorvorrichtung für einen Gurtförderer zur Erfassung eines Zustandes von Tragrollen dadurch aus, dass die in einem Fördergurt anordbare Sensorvorrichtung einen ersten und einen zweiten um 180° gedreht angeordneten Sensor aufweist, wobei der erste und der zweite Sensor beabstandet zueinander angeordnet sind und zwischen den beiden Sensoren eine Verdickung aus elastisch verformbaren Material, vorzugsweise gummielastischen Gurtmaterial, angeordnet ist. Dadurch können Schubspannungen auf einfache Art detektiert werden. Diese Sensorvorrichtung ist vorzugsweise als Einheit in einem Gehäuse angeordnet. Diese Einheiten können in einen Fördergurt eingebracht werden, z.B. durch Eingießen oder Einvulkanisieren.

Die Erfindung sieht vor, eine Sensorvorrichtung bereitzustellen, mit der aus den Messdaten folgende Zustände bei Anordnung in einem Fördergurt ermittelt werden können:
- Schwergängige Lager, z.B. durch Bruch des Rollenkäfigs oder durch Verlust von Schmiermittel oder durch Eindringen von Fremdkörper,
- Inhomogene Geschwindigkeitsverteilung am Umfang der Tragrolle durch Mantelverschleiß oder Aufbackungen am Umfang der Tragrolle
- Erkennen von nicht mehr oder nur zeitweise oder nur teilweise mit zu niedriger Kraft in Eingriff stehenden Tragrollen.

Erfindungsgemäß ist ein Kontraktionsstop vorgesehen. Als Kontraktionsstop kann beispielsweise eine Einlage aus Metall vorgesehen sein. Durch den Kontraktionsstop wird das Übersprechen der Vertikalkraft auf die horizontale Messrichtung vermindert. In einer Gurtförderanlage werden bei bestimmungsgemäßem Betrieb sehr hohe Vertikallasten durch die Beladung erzeugt. Insbesondere entstehen bei der Materialaufgabe sehr hohe Spitzenlasten. Die im Gurt-/Rollenkontakt wirkenden horizontalen Kräfte (Schubkräfte) sind dagegen unter normalen Betriebsbedingungen relativ niedrig. Mit zunehmendem Laufwiderstand der Tragrollen steigen die Schubkräfte an.

In einer Situation, bei der eine etwas zu tief hängende Tragrolle gerade in den Eingriff kommt, können auch sehr hohe Schubkräfte entstehen, da die Tragrolle auf eine Umfangsgeschwindigkeit entsprechend der Gurtgeschwindigkeit beschleunigt werden muss. Es ist also insbesondere für den Normalbetrieb erforderlich, bei dem eingesetzten Sensorprinzip die geringe Horizontalkraft von der hohen Vertikalkraft zu isolieren. Gleichzeitig muss das Sensorsystem auch die hohen Schubkräfte beim Beschleunigen einer Tragrolle sowie die hohen Spitzenkräfte bei der Materialaufgabe zerstörungsfrei ertragen.

Es hat sich als vorteilhaft herausgestellt, als ersten und als zweiten Sensor jeweils einen 2-dimensionalen Sensor zur Messung einer Kraft oder eines Druckes vorzusehen.

In einer bevorzugten Ausführungsform ist vorgesehen, dass der erste und der zweite Sensor mit einer Kontaktmembran, vorzugsweise über ein Verbindungselement, in Wirkverbindung stehen und damit elastische Verformungen der Kontaktmembran durch die Sensoren erfasst werden. Die Kontaktmembran ist vorzugsweise mit der zwischen dem ersten und zweiten Sensor vorgesehenen Verdickung einstückig ausgebildet. Die Verdickung ist zur Verbindung der Sensoren mit der Kontaktmembran und zur Aufnahme der wirkenden Kräfte vorgesehen. Diese Einheit ist vorzugswiese in einem Gehäuse angeordnet.

In einer bevorzugten Ausführungsform ist zumindestens ein um 90° versetzt angeordneter dritter Sensor zur Aufnahme von einer Querkraft vorgesehen. Durch die Detektion von Querkräften kann die Ursache des Schieflaufs eines Gurtes ermittelt werden.

Sind bei der Sensorvorrichtung zwei Sensoren zur Ermittlung von Querkräften vorgesehen, so kann aus der aufgenommenen Differenz eine resultierende Querkraft ermittelt werden. Es kann aber auch eine Sensorvorrichtung zur Ermittlung von Querkräften vorgesehen sein. So kann eine Erste Sensorvorrichtung zur Ermittlung der Schubkräfte in Förderrichtung vorgesehen sein und eine Weitere um 90° rotiert angeordnete Sensorvorrichtung zur Detektion der Querkräfte vorgesehen sein. Sind mehrere Sensorvorrichtungen an derselben Längsposition verteilt über die Gurtbreite in einem Fördergurt angeordnet, so können auch die in diesen Sensorvorrichtungen sensierten Vertikalkräfte für die Ermittlung von Schieflauf herangezogen werden.

Es hat sich als vorteilhaft herausgestellt bei Tragrollen aus Stahl eine Spulenanordnung zur Erfassung von Rollen vorzusehen. Dadurch können auch Rollen erkannt werden, die mit dem Fördergurt/ Kontaktmembran der Sensorvorrichtung nicht in Eingriff stehen.

Bei einem erfindungsgemäßen Fördergurt ist eine Mehrzahl von erfindungsgemäßen Sensorvorrichtungen über die Gurtbreite des Fördergurts vorgesehen.

Es hat sich als vorteilhaft herausgestellt für eine autarke Energieversorgung eine Energy Harvesting Einheit mit einer Schlauchpumpe vorzusehen. Solch eine Energy Harvesting Einheit kann für die Versorgung mit elektrischer Energie von einem oder einer Mehrzahl in einem Fördergurtabschnitt vorgesehenen Sensoren vorgesehen sein. Es kann vorgesehen sein parallel zu der Energy Harvesting Einheit eine Batterie anzuordnen, um auch bei Stillstand einer Förderanlage oder bei erstmaliger Inbetriebnahme einen sicheren Ruhezustand des Systems bereitstellen zu können.

Durch vorsehen von einem Charge Controller kann vorgesehen werden einen Sensorbetrieb nur dann vorzunehmen, wenn eine Datenaufnahme für einen vollen Umlauf und auch eine Datenübertragung aus energetischer Sicht sichergestellt ist.

Es hat sich als vorteilhaft herausgestellt die in einem Fördergurt vorgesehenen elektrischen Verbindungen in Leitungskanälen, zumindestens über einen Teil der Leitungsstrecke, ohne feste Verbindung zum Gurtmaterial zu verlegen. Vorzugsweise ist in den Leitungskanälen ein Füllmaterial zur Lagerung der elektrischen Leitungen vorgesehen. Vorzugsweise ist das Füllmaterial elastisch und/oder körnig. Als besonders geeignet hat sich ein poriges und elastisches Füllmaterial herausgestellt. Durch das Füllmaterial ist aber auch sichergestellt, dass die elektrischen Leitungen ihre Lage in den Kanälen verändern können. Dadurch kann die mechanische Beanspruchung der elektrischen Leitungen reduziert werden. Wird der Fördergurt beim Umlauf z.B. durch Umlenkrollen gewalkt, so werden die elektrischen Leitungen nur in einem verminderten Maße beansprucht.

Es hat sich als Vorteilhaft herausgestellt in dem Fördergurt zumindestens eine Piezoleitung in Querrichtung zu den Gurtkanten als Trigger vorzusehen. Diese Triggerung kann zur Aktivierung von Datenerfassung und Speicherung genutzt werden. Durch das Triggersignal werden Komponenten im Gurt angesprochen.

Solche eine Piezoleitung ist insbesondere in einem vorbestimmten Abstand zu in dem Fördergurt angeordneten Sensorvorrichtungen angeordnet. Ist eine Piezoleitung beidseitig in einem vorbestimmten Abstand zu in Querrichtung verteilten Sensorvorrichtungen angeordnet, so ist die Einbaurichtung eines Fördergurtteilstückes nicht zu beachten.

Bei einem erfindungsgemäßen Gurtförderer für Schüttgut mit einem zwischen Umkehrstationen (umfasst auch Antriebsstation) endlos umlaufenden flexiblen Fördergurt ist vorgesehen für die Bereitstellung einer Datenübertragung vom umlaufenden Fördergurt zu einer ortsfesten Empfangseinheit ortsfest beim Gurtförderer Schlitzkabel vorzusehen. Es hat sich als vorteilhaft herausgestellt pro Kilometer Förderstecke mindestens 7,5 Meter Schlitzkanal entlang der Gurtförderstrecke für eine Datenübertragung vorzusehen.

Für eine Positionszuordnung von Messwerten hat es sich als vorteilhaft herausgestellt ortsfest angeordnete Marker, vorzugsweise Funkmarker, vorzusehen. Die Signale der Marker werden von den vorbeifahrenden Sensorvorrichtungen aufgenommen. Dadurch wird eine zuverlässige Zuordnung von aufgenommenen Messdaten zu Tragrollen vereinfacht.

Erfindungsgemäß sind beim Verfahren eines Förderbetriebes eines Gurtförderers die folgenden Schritte vorgesehen:
- Steuerung eines Betriebes einer Datenerfassung durch die Sensoreinheiten in dem Fördergurt in Abhängigkeit von einem Speicherzustand eines Akkumulators, wobei eine Datenerfassung erst gestartet wird, wenn der Ladungszustand des Akkumulators ausreichend ist, um die Datenerfassung und Übertragung der Daten eines vollständigen Umlaufes des Fördergurtes sicherzustellen Dadurch wird sichergestellt, dass eine lückenlose Datenerfassung möglich ist und diese Daten auch für eine Auswertung einer zentralen Steuereinheit zugeführt werden können.
- Erfassung von Schubspannungen beim Passieren von Tragrollen und versehen dieser Daten mit einem Zeitwert. Dadurch können ordnungsgemäß arbeitende Tragrollen erkannt werden.
- Erfassen von vorbestimmten Positionen mit einem Zeitwert. Dadurch ist es möglich die Position und Zuordnung von Messdaten zu Tragrollen vorzunehmen, wobei auf die Geschwindigkeit des Fördergurtes mit einbezogen werden kann.
- Übertragen der Daten über eine ortsfest angeordnete Empfangseinheit und Zuleitung zu einer zentralen Steuereinheit. Dadurch ist es möglich einen Vergleich mit vorliegenden Daten durchzuführen und frühzeitig Veränderungen festzustellen.
- Ermittlung von Tragrollenzuständen unter Verwendung von Zeit- und Positionsdaten.

Anhand von Ausführungsbeispielen werden weitere vorteilhafte Merkmale der Erfindung erläutert unter Bezugnahme auf die Zeichnungen.
- Fig. 1:: Gurtförderer
- Fig. 2:: schematische Darstellung einer erfindungsgemäßen Ausführung mit einer Schlauchpumpe (Peristaltikpumpe) zur Gewinnung von elektrischer Energie

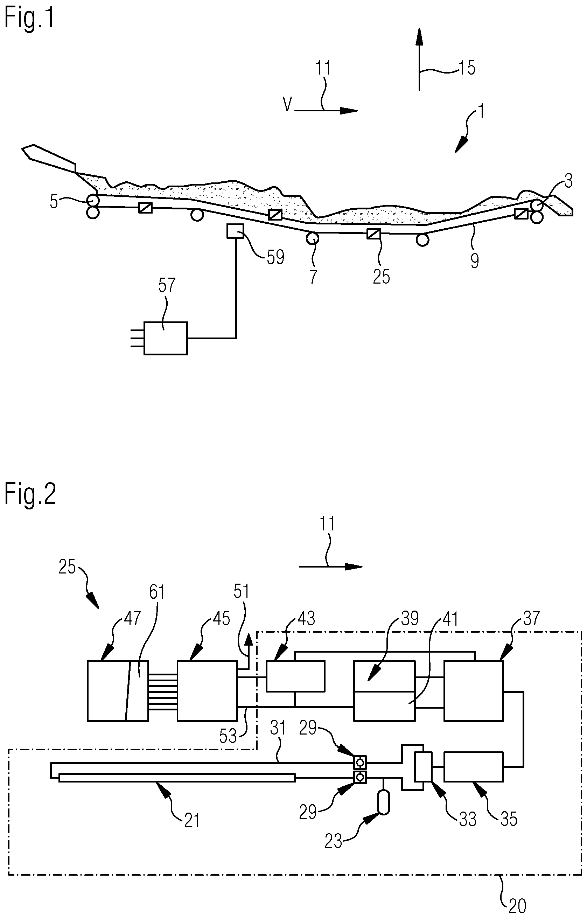

- Fig. 2:: Sensoreinheit

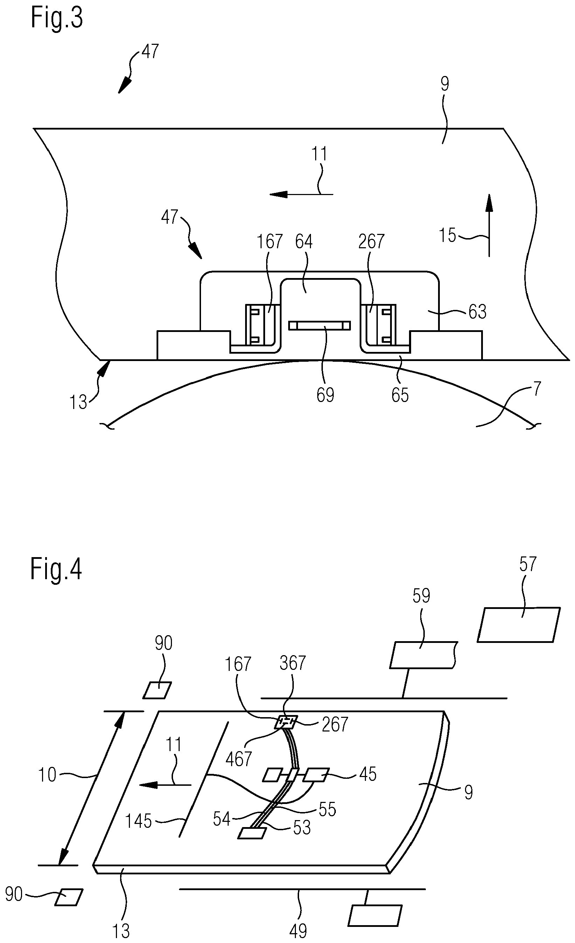

- Fig. 3:: Fördergurt mit Empfangseinheit

Anhand von Figur 1 wird der Aufbau eines Gurtförderers 1 exemplarisch beschrieben. Der Gurtförderer 1 weist einen umlaufenden Fördergurt 9 auf. Der Fördergurt 9 wird durch mindestens eine Antriebstrommel 3 angetrieben. Durch Umlenkstation 5 und die Antriebstrommel 3, die auch eine Umlenkstation 5 ist, wird der Fördergurt umgelenkt. Auf der Förderstrecke wird der Fördergurt 9 durch Tragrollen 7 gelagert. Üblicherweise sind mehrere nebeneinander angerordnete über die Gurtbreite 10 verteilte Tragrollen 7 vorgesehen. Es ist eine Empfangseinheit 59 zum Empfangen von Daten der in dem Fördergurt angeordneten Sensorvorrichtung 25 vorgesehen. Die Förderrichtung ist mit 11 gekennzeichnet und die Vertikalrichtung 15 ist in dieser Figur eingetragen.

Unabhängig von der spezifischen Funktion unter den Lastbedingungen am Einbauort müssen alle Komponenten der Sensorvorrichtung 25 die speziellen Bedingungen entlang des Gurtverlaufes ertragen. Diese sind z.B. Biegeradius des Fördergurtes 9 um die Antriebstrommel und Umlenkstation, Zentriereinrichtungen im Randbereich des Gurtes wie zum Beispiel Dachrollenstuhl, Mangelrollen, Steuerrollen an den Gurtkanten 13 sowie Abstreifer. Das Anlaufen der Gurtkante an den Stahlbau einer Anlage wird nicht als bestimmungsgemäßer Betrieb angesehen.

Das Gesamtsystem umfasst gemäß Figur 1 und Figur 2 die folgenden Komponenten:
- eine oder mehrere Sensorvorrichtungen 25 verteilt über die Gurtbreite
- eine oder mehrere Piezoleitungen in Querrichtung von Gurtkante 13 zu Gurtkante 12 als Triggersignalgeber 145
- eine oder mehrere magnetisch vorgespannte Spulenanordnung 61 verteilt über die Gurtbreite 10,
- lineare Schlauchpumpe 21 als Bestandteil der Energy Harvesting Einheit 20, auch als lineare Peristaltik-Pumpe bezeichnet, eingebaut in Längsrichtung in die Laufseite des Gurtes 9 zur Förderung eines flüssigen oder gasförmigen Mediums. Es kann eine eine Engery Harvesting Einheit für die Bereitstellung der elektrischen Energie für mehrere Sensorvorrichtungen vorgesehen sein.
- Leitungsverbindungen 31 zur Verbindung der Pneumatik-/Fluidik-Komponenten
- Leitungsverbindungen 54 zwischen den elektrischen/elektronischen Komponenten
- Ventile 29 zur Steuerung des gepumpten Mediums
- Pufferspeicher 23 zur Aufnahme einer von der Pumpe verdrängten Flüssigkeits- oder Gasmenge
- Energiewandler bestehend aus Mikroturbine 33 und Generator 35, Es kann ein Drehstrom- oder Gleichstromgenerator vorgesehen sein.
- Spannungsbegrenzungseinheit
- Converter 37, insbesondere Buck-Boost-Convertereinheit
- Laderegler für Akkumulator 41 und/oder Hochleistungskondensator/PowerCap
- Batterie 39 als Backup für das Leistungsmanagement
- Energy-Harvesting-Controllereinheit 43
- Steuereinheit 45 zur Datenerfassung, Speicherung, Online-Auswertung, Übertragung von Daten sowie Synchronisation und Kommunikation mit externen stationären Komponenten mit einer Antenne 51
- GPS-Empfänger in der Sensorvorrichtung zur Unterstützung der Lokalisierung einer defekten Tragrolle
- stationäres System mit einer zentrale Steuereinheit 57 zur Auswertung und Darstellung des Tragrollenzustandes und zur Erfassung des Geschwindigkeitsprofils der Förderanlage
- stationäre Empfangseinheit 59 mit Radialschlitzkabel 49 als Antenne und mit GPS-Empfänger im stationären Teil der Anlage als Referenzmarke zur Bestimmung der Position einer als defekt erkannten Tragrolle
- Marker-System mit Markern 90 zur Kennzeichnung von Förderwegabschnitten

Einige dieser Merkmale unterstützen eine bessere bzw. genauere Erkennung von defekten Tragrollen, sind aber nicht zwingend erforderlich.

Anhand von Figur 2 wird eine mögliche Ausführung einer Sensorvorrichtung 25 mit einer Energy Harvesting Einheit 20 gezeigt und näher beschrieben. Die Sensorvorrichtung 25 umfasst eine Energy Harvesting Einheit 20 für die Bereitstellung von elektrischer Energie. Die Energy Harversting Einheit 20 weist eine Schlauchpumpe 21 auf. Das in der Schlauchpumpe 21 befindliche Medium, vorzugsweise ein Gas, wird beim Überfahren einer Tragrolle 7 aus der Schlauchpumpe 21 verdrängt. Es passiert ein Rückschlagventil 29 und treibt eine Turbine 33 an. Durch die Bewegung der Turbine wird ein Generator 35 zur Erzeugung von elektrischer Energie angetrieben. Die elektrische Energie kann für den Betrieb einer Mehrzahl an Sensoriken 47, wie in Figur 3 dargestellt, vorgesehen sein.

In einer Gurtförderanlage werden bei bestimmungsgemäßem Betrieb sehr hohe Vertikallasten durch die Beladung erzeugt. Insbesondere entstehen bei der Materialaufgabe sehr hohe Spitzenlasten. Die im Gurt-/Rollenkontakt wirkenden horizontalen Kräfte (Schubkräfte) sind dagegen unter normalen Betriebsbedingungen relativ niedrig. Mit zunehmendem Laufwiderstand der Tragrollen steigen die Schubkräfte an. In einer Situation, bei der eine etwas zu tief hängende Tragrolle gerade in den Eingriff kommt, können auch sehr hohe Schubkräfte entstehen, da die Tragrolle auf eine Umfangsgeschwindigkeit entsprechend der Gurtgeschwindigkeit beschleunigt werden muss.

Es ist also insbesondere für den Normalbetrieb erforderlich, bei dem eingesetzten Sensorprinzip die geringe Horizontalkraft von der hohen Vertikalkraft zu isolieren. Gleichzeitig muss das Sensorsystem auch die hohen Schubkräfte beim Beschleunigen einer Tragrolle sowie die hohen Spitzenkräfte bei der Materialaufgabe zerstörungsfrei ertragen.

Neben den mechanischen Anforderungen müssen auch weitere Anforderungen erfüllt werden:
- Messtechnisch hinreichend genau aufgelöster zeitlich sehr kurzer Tragrollenkontakt.
- Kompatibilität zu den am Gurt angewendeten Fertigungsmethoden.
- Funktionsfähigkeit unter den spezifischen Umwelteinflüssen (Vibrationen, Schmutz, Feuchtigkeit, Temperatur).

Eine elastische Kontaktmembran 65 befindet sich flächenbündig auf der Laufseite des Fördergurtes 9 und überträgt die vertikalen und horizontalen Kontaktkräfte mit der Tragrolle mittels einer Verdickung 64, auch als Stempel bezeichnet. Dabei stützt sich die Verdickung 64 im Sensorgehäuse 63 zu den beiden Kraftsensoren 167, 267 im Sensorgehäuse ab. Der Kontraktionsstop 69 dient dazu, die Querdehnung infolge der Vertikalkraft zu reduzieren. Das Summensignal bildet den Einfluss der Vertikalkraft, das Differenzsignal den Einfluss der Horizontalkraft ab. Diese Signale werden durch eine im Sensor verbaute Elektronik auf einer Starr-Flex-Platine vorverarbeitet und mit einer Stromschleife zur Gurtkante für eine Datenübertragung zu einer ortsfesten Empfangseinheit geleitet.

Die zuvor aufgeführten Piezoleitungen 145 werden verwendet, um Triggersignale zur Steuerung der Messdatenerfassung zu erhalten. Die Piezoleitungen 145 erfassen mehrere Arten von mechanischer Beanspruchung wie z.B. Pressung, Biegung und Längsdehnung. Damit wird insbesondere bei dem Überlaufen einer Tragrolle 7 ein Ladungssignal erzeugt, das relativ genau den Zeitpunkt des Überrollvorgangs repräsentiert. Die Messdatenerfassung kann dadurch wird auf das Überlaufen einer Tragrolle beschränkt werden.

Dieses Triggersignal wird entsprechend aufbereitet und dient danach zur
a) Steuerung des Messablaufes
b) Erkennung der Tragrollenabstände und
c) Erkennung des Muldungsüberganges.
Es werden dabei nur Tragrollen erkannt, die auch im Eingriff sind.

Die zuvor aufgeführten Spulenanordnung 61 dienen ebenfalls dazu, den Überrollzeitpunkt zu erfassen. Gleichzeitig können diese auch Tragrollen erkennen, die tiefer als der Gurt hängen, also gerade nicht im Eingriff sind - sofern es sich hierbei um Rollen mit Stahlmantel handelt.

### Beschreibung der Energy-Harvesting-Einheit, Figur 2:

Der Betrieb eines oben beschriebenen Überwachungssystems, das in einem Fördergurt verbaut ist, erfordert für einen Betrieb über die Lebensdauer des Fördergurtes eine autarke Energieversorgung. Dadurch kann die Wartung minimiert werden bzw. auf eine Wartung der im Gurt verbauten Komponenten verzichtet werden.

Bei einer kurzen geforderten Einsatzdauer kann ein System auch mit Primärbatterien betrieben werden und kann so bis zum Verbrauch der mitgeführten Energie Messdaten erfassen und speichern.

Für einen dauerhaften Betrieb ist die Verwendung von Primärbatterien aufgrund der damit begrenzten Funktionsdauer nicht möglich.

Die hier benötigte Energie muss auf unbegrenzte Dauer zur Verfügung stehen, wobei ein Arbeitszyklus (Messen, Speichern, Auswerten und Übertragen) durch einen Ladezyklus (Energie gewinnen und speichern) unterbrochen sein kann. Der Dutycycle A/L (Arbeitszyklus/Ladezyklus) soll möglichst groß sein. Als akzeptable werden Größenordnungen von 1 > A/L > 0.1 angesehen. Der Dutycycle A/L = 1 ist gleichbedeutend mit Dauerbetrieb ohne Unterbrechung.

Wie später noch gezeigt wird, ist für einen bestimmten Dutycycle auch eine bestimmte Leistungsfähigkeit der Datenübertragungsstrecke zwischen Fördergurt 9 und einer stationären Empfangseinheit 59 erforderlich.

Ein Betrieb mit z.B. einem Dutycycle von 1.0 erfasst zwar kontinuierlich den Tragrollenzustand, benötigt dazu aber entweder eine sehr performante Datenstrecke oder aber eine leistungsfähige online Datenauswertung, Datenhaltung und Datenkompression, damit die Nutzinformation auch synchron verfügbar ist.

Bei der gezeigten Sensorvorrichtung 25 wird das Pumpenprinzip einer Schlauchpumpe, auch Peristaltikpumpe genannt, verwendet.

Durch die Formgebung und Integration des Pumpenschlauches 21 in den Fördergurt, sowie durch die Verwendung der Tragrollen als Verdrängerelement wird ein flüssiges oder gasförmiges Medium beim Überrollen einer Tragrolle 7 oder Umlenkrolle 5 gefördert. Die dafür notwendige Antriebsleistung wird aus dem bewegten Fördergurt 9 bzw. dessen Motoren entnommen.

Das Medium wird über ein Rückschlagventil 29 zu einem Pufferspeicher 23 als Puffervolumen geführt. Dieses ist erforderlich, um beim Umlauf um die Antriebstrommeln 3 oder Umlenkstationen 5 das dabei auf voller Pumpenlänge verdrängte Medium vollständig aufzunehmen und damit den Druck zu begrenzen.

Wie in Fig. 2 dargestellt, wird mit der so gewonnenen Energie eine Mikroturbine 33 gespeist. Das Laufrad sitzt auf der Welle eines Gleichstromgenerators 35 und erzeugt aus der Drehbewegung eine Gleichspannung. Diese speist einen Buck-Boost-Charger als Converter 37.

### Der Back-Boost Controller beinhaltet verschiedene Funktionen:

- Wandlung der Generatorspannung auf ein für den Akkumulator 41 geeignetes Potential und Überwachung des Lade- und Entladevorganges
- Impedanzanpassung des Back-Boost Chargers an die Energiequelle zur optimalen Energieausnutzung
- Versorgung des Energie Management -Controllers 43 mit Energie
- Umschaltung zwischen Akkumulator 41 und Backup-Batterie 39
- Aktivierung des Steuereinheit 45

### Zum ersten Punkt - Überwachung des Ladevorganges-:

Um einen Akku zu laden, muss die variable Eingangsspannung auf ein entsprechend dem aktuellen Ladezustand geeignetes Potential gebracht werden. Bei dem Laden und Entladen eines Akkus muss zusätzlich der für den jeweiligen Akku-Typ zulässige Betriebsbereich überwacht werden.

### Zum zweiten Punkt - Impedanzanpassung-:

Bei Betrieb der Einheit aus Turbine 33 und Generator 35 darf eine maximale Drehzahl nicht überschritten werden. Dieser Zustand tritt z.B. dann auf, wenn bei vollem Akkumulator 41 die gelieferte Energie nicht abgenommen werden kann. Die Begrenzung erfolgt durch eine gezielte Impedanzsteuerung des Converters 37.

Zum dritten Punkt - Energieversorgung des Energie-Management Controllers 43-: Die Versorgung des Energie-Management Controllers 43 wird als erstes sichergestellt, bevor der Ladevorgang gestartet wird. Auf diesem Weg kann der Energie-Management Controller den aktuellen Ladezustand überprüfen und die damit möglichen Aktionen auslösen.

### Zum vierten Punkt -Umschaltvorgang-:

Die Backup-Batterie 39 ist erforderlich, um bei Stillstand der Anlage einen sicheren Ruhezustand des Systems zu erreichen.

### Zum fünften Punkt -Aktivierung der Steuereinheit-:

Die Steuereinheit 45, auch als Main-Controller bezeichnet, wird aktiviert, wenn der Ladezustand die Messung eines vollständigen Gurtumlaufes erlaubt und genügend Energie verfügbar ist, um die so erfassten Daten auszuwerten und Statusmeldungen an ein stationäres System, hier Empfangseinheit 59 und zentrale Steuereinheit 57, zu übertragen.

Das in den vorlaufenden Punkten beschriebene System ist so in der Lage, das Messsystem autark mit der nötigen Energie zu versorgen und die benötigten Messdaten als Rohwerte zu erfassen. Zur Erfüllung der eigentlichen Aufgabe des Systems müssen nun die Daten erfasst und ausgewertet werden.

Bei der Erfassung der Sensordaten wird der Signalverlauf bei dem Überlaufen der Tragrollen 7 gemessen. Dieser Vorgang erfolgt zeitlich in einer Größenordnung von 20 bis 40 Millisekunden, abhängig von der Geschwindigkeit des Fördergurtes 9. Daraus ergibt sich die Anforderung nach einer entsprechend hohen Abtastung der Sensorsignale, um auch die erwartete Dynamik des Überrollvorganges unter Berücksichtigung des Abtasttheorems zu erfassen. Dieser Umstand würde bei einer kontinuierlichen Erfassung und Speicherung der Daten zu einer sehr hohen Datenmenge führen, die von dem im Gurt mitlaufenden System ausgewertet werden muss.

Zur Optimierung der Datenerfassung wird daher die Speicherung der Daten in Verbindung mit den Signalen der Piezo- und Spulendaten gesteuert. Dazu werden die Piezo- und Spulendaten kontinuierlich abgetastet und ausgewertet. Bei jedem Umlauf wird die Position der erkannten Tragrolle 7 als Zeitstempel gespeichert. Da die aktuelle Geschwindigkeit nicht verfügbar ist, wird die jeweilige Tragrollenposition als relative Zeit geführt.

Wenn sich das System im Unterdrum befindet, was durch die Auswertung der Sensordaten erkannt wird, werden die neu erhaltenen "Tragrollenpositionen" mit den bereits vorhandenen korreliert und skaliert. Damit ergibt sich eine Phasenlage als Zeitoffset zwischen den aktuellen und bereits gespeicherten Daten. Gleichzeitig können so Lücken in der Tragrollenfolge erkannt werden.

Damit bei einer Schadensbehebung der Einbauort der Tragrolle 7 leichter identifiziert werden kann, wird beim Passieren von stationären Markern 90 die Marker-ID erfasst und den Daten zugeordnet.

Das Ziel bei der Auswertung der Daten ist es im online-Betrieb die Menge an Ergebnisdaten möglichst weit zu reduzieren. Damit lässt sich bei der Datenstrecke zwischen Gurt und stationärer Empfangseinheit 59 des Überwachungssystems die Bandbreite reduzieren bzw. der stationäre Teil des Überwachungssystems auf möglichst einen Ort begrenzen.

Eine Reduzierung der online-Daten wird dadurch erreicht, indem für das gesamte Obertrum des Förderwegs jeweils für einen Umlauf zunächst aus der Schubsignatur dafür eine Kenngröße k_schub abgeleitet wird. Die Schubkomponente besteht dabei aus dem Anteil für die Lagerreibung k_schub_L und dem Anteil für das für einen Leistungseintrag erforderliche Bremsmoment k_schub_M. Gleichzeitig wird als weitere Kenngröße k_last infolge der aktuellen Beladung im Bereich des Sensors ermittelt. Es wird zugrunde gelegt, dass ein Zusammenhang besteht zwischen k_schub_L, k_schub_M und k_last, und sich dieser Zusammenhang in Abhängigkeit eines Schadens an der Tragrolle verändert.

Damit verschiedene Umläufe miteinander vergleichbar sind, werden die Kenngrößen auf die jeweilige Last bezogen. Durch statistische Betrachtung von zum Beispiel der Häufigkeitsverteilung über die gesamte Menge an Tragrollen des Obertrums lassen sich diejenigen Tragrollen erkennen, die eine signifikante Abweichung gegenüber der Mehrzahl der Tragrollen haben. Aus der zeitlichen Veränderung der einzelnen Häufigkeitsverteilungen lassen sich Schäden in der Entstehung erkennen und den entsprechenden Tragrollen zuordnen.

Ergänzend wird für alle Tragrollen 7 des Obertrums das Lastkollektiv infolge der Beladung erfasst. Dazu ist zum einen die sich aus der Messung ergebende Lastverteilung über den Tragrollen 7 des Obertrums als auch die von einer Bandwaage ermittelte Lastverteilung erforderlich. Zum Beispiel hat eine zu tief hängende Tragrolle 7 grundsätzlich die Eigenschaft, weniger Last aus dem gesamten Lastkollektiv zum Nachteil der Nachbartragrollen zu übernehmen.

### Übertragung der Messergebnisse

Das Datenaufkommen hängt direkt von der erforderlichen bzw. möglichen Abtastrate ab, mit der die Sensorsignale erfasst werden. Die so pro Kilometer Förderweg erzeugte Datenmenge ergibt sich beispielsweise wie folgt:

| | |
|---|---|
| Kontaktdauer Sensor - Tragrolle: | 20 ms |
| Anzahl Rollen je Rollenstation: | 3 Stück |
| Anzahl Rollenstationen pro km: | 500 Stationen |
| Summen-Samplerate: | 50 kHz |
| Anzahl Sensorsignale: | 6 Signale |
| Wortbreite: | 16 Bit (2 Byte) |
| Gurtgeschwindigkeit: | 7.5 m/s |

Mit diesen Vorgaben ergibt sich ein Rohdatenaufkommen von 400 kByte/km Förderweg. Verwendet man WLAN als Übertragungsmedium und zum Beispiel TCP oder UDP als (ungesichertes) Protokoll, so kann man von einer Transferrate von ca. 1 Mbyte/s ausgehen. Bezogen auf die Daten aus der Vorgabe entspricht dies unter Einbeziehung eines Sicherheitsfaktors für diese Anlagenkonfiguration mindestens einer Strecke von 7.5 m Gurtweg pro Kilometer Förderweg.

Um in dem Umfeld eines Fördergurtes eine möglichst lange Verbindungsdauer zwischen der Gurtelektronik und dem stationären System herzustellen, ist ein Schlitzkabel 49 als Antenne, ein sog. Radiating Cable, vorgesehen. Dieses Antennenkabel hat auf der gesamten Länge radiale Schlitze in einem Kupfermantel. Auf diese Weise wird eine Funkverbindung entlang des Kabels ermöglicht. Das Antennenkabel 49 wird entlang des Förderweges in geringem, aber sicherem Abstand zur Gurtkante 13 angeordnet und ermöglicht dadurch sowohl eine hohe Signalstärke als auch eine Verbindungsdauer über eine große Wegstrecke.

Die im Fördergurt angeordneten Komponenten der Sensorvorrichtung 25 sind mit elektrischen Leitungen 54 und mit Leitungen für das Treibmedium, auch als Verbindungskanal 31 bezeichnet, verbunden. Diese müssen sich innerhalb des Gurtes 9 befinden und können eine räumliche Anordnung und einen gekrümmten Verlauf haben.

Im Fall der elektrischen Leitungen 54 werden die elektrischen Leitungen fliegend, also ohne feste Verbindung zu dem Gurtmaterial, verlegt. Dadurch wird die mechanische Beanspruchung durch die Verformung des Gurtes 9 bei Überlaufen der Antriebs-, Steuer- und Tragelemente reduziert. Damit die Eigenbewegung der Leitungen durch Vibrationen und Verformungen reduziert wird, enthält der Leitungskanal ein elastisches und poriges Füllmaterial.

Im Fall der Verbindungskanäle für das Treibmedium der Mikroturbine 33 sollen diese einen großen Querschnitt erhalten. Das wird dadurch erreicht, dass dieser Querschnitt direkt durch das Gurtmaterial gebildet wird und somit kein zusätzliches Wandungsmaterial benötigt wird.

### Einbringen der Leitungsquerschnitte:

Bis auf einen sehr geringen Anteil werden die Leitungsquerschnitte und -verläufe bei dem Aufbau des Gurtbereiches für die mechanischen und elektrischen/elektronischen Komponenten eingebracht. Der dafür benötigte Bauraum ist initial verfügbar oder wird zunächst freigelegt. Um einen Leitungsquerschnitt herzustellen, wird z.B. ein dickwandiger Silikonschlauch mit einem eingesetzten Zugelement aus einem hoch festen flexiblen Werkstoff (z.B. Aramid-Litze) in der gewünschten Leitungsanordnung in dem Bauraum fixiert. Zur späteren Trennung von der polymerisierten Aufbaumasse wird der Silikonschlauch auf der Oberfläche mit einem geeigneten Trennmittel versehen. Damit das Vervollständigen der Gurtkontur mittels Gießharzen oder Kautschuk nicht zu einem Einfallen/Eindrücken des Silikonformteiles führt, kann dieses durch Innendruck stabilisiert werden. Das Entfernen des Schlauchnegativs erfolgt durch Herausziehen des Silikonschlauches. Bei diesem Vorgang verringert sich der Schlauchdurchmesser durch Querkontraktion. Dadurch entstehen in der Grenzfläche zu dem Vergussmaterial hohe Zug- und Schubspannungen, die zu einer Ablösung des Silikonschlauches von dem neu erstellten Gurtvolumen führen. Das Zugseil verbleibt dabei in dem neu entstandenen Gurtvolumen und wird zum Einziehen der elektrischen Leitungen 54 verwendet. Nach vollständiger Applikation der Leitungen wird im letzten Arbeitsschritt das Restvolumen durch ein Füllmaterial 54 aufgefüllt. Dabei soll sich die Leitung in dem Ausgleichsvolumen leicht bewegen können und so die Belastung durch die äußere Krafteinwirkung begrenzen.

### Lokalisierung einer defekten Tragrolle:

Ein ganz wesentlicher Aspekt bei der Entwicklung des oben beschriebenen Diagnose-Systems ist die Methode zur Behebung der erkannten Mängel der Gurtförderanlage 1. Dafür ist in den Fördergurt 9 mindestens eine Sensorvorrichtung 25, vorzugweise mehrere Sensorvorrichtungen 25, verfügbar. Durch diese Sensorvorrichtungen wird das Auffinden einer konkreten Tragrolle 7 an einer langen Förderanlage mit mehreren Tausend Tragrollen ermöglicht.

Dabei hat sich bewährt, dass der Ort bzw. die Ortskoordinate einer defekten Tragrolle 7 auf Basis eines von dem Erfassungssystem generierten Rollenplans in Verbindung mit den von einem stationären GPS-System erhaltenen Referenzdaten ermittelt wird. Der Rollenplan und die GPS-Referenz werden dazu unter Berücksichtigung der aktuellen Gurtgeschwindigkeit synchronisiert. Der für einen bestimmten Zeitraum ermittelte Tragrollenverlauf (Tragrollenplan) mit Kennzeichnung der als auffällig erkannten Tragrollen wird auf einen Tablet-PC mit integriertem GPS-Modul übertragen. In den Tragrollenverlauf wird zusätzlich die Tragrollenposition in Förderweg-Richtung, bezogen auf die Referenzposition des stationären GPS-Empfängers, eingetragen. Eine Genauigkeitsverbesserung kann durch den Einsatz von Differential-GPS erfolgen.

Auf dem Tablet-PC wird bei der Befahrung des Förderwegs entsprechend der aktuellen GPS-Position der für diese Position gültige Ausschnitt aus dem TragrollenPlan dargestellt (lfd. Tragrollennummer, reale Abstände zu den Nachbartragrollen, ...). Da nicht sichergestellt werden kann, dass jeder Tragrollenstuhl gekennzeichnet ist, hat der Betreiber damit die Möglichkeit, vor Ort die Tragrollen in dem dargestellten Fördererabschnitt zu inspizieren bzw. den Mangel zu beheben.

Das Marker-System mit den ortsfest angeordneten Markern 90 wird dazu verwendet, weitere Referenzpunkte in den Tragrollenplan einzufügen, die dann eine genauere Lokalisierung ermöglichen. Diese erfolgt dadurch, dass bei der Befahrung des Förderweges am Ort eines realen Markers dessen Identifikationsnummer am Tablet-PC eingegeben wird. Damit werden der Marker im Rollenplan, sowie die dazugehörige GPS-Wegkoordinate, mit dem realen Marker des Förderweges synchronisiert. Es wird damit sichergestellt, dass kumulierte Abweichungen jeweils an einem angebauten Marker kompensiert werden.

### Bezugszeichenliste

| | |
|---|---|
| 1 | Gurtförderer |
| 3 | Antriebstrommel |
| 5 | Umlenkstation |
| 7 | Tragrollen |
| 9 | Fördergurt |
| 10 | Gurtbreite |
| 11 | Förderrichtung / Bewegungsrichtung |
| 13 | Gurtkanten |
| 15 | Vertikalrichtung |
| 17 | |
| 19 | |
| 20 | Energy Harvesting Einheit |
| 21 | Schlauchpumpe /Peristaltikpumpe |
| 23 | Pufferspeicher |
| 25 | Sensorvorrichtung |
| 27 | |
| 29 | Rückschlagventil |
| 31 | Verbindungskanal |
| 33 | Turbine / Mikroturbine |
| 35 | Generator |
| 37 | Converter |
| 39 | Batterie (Back-up Batterie) |
| 41 | Akkumulator |
| 43 | Energie-Management Controller |
| 45 | Steuereinheit (im Fördergurt) |
| 47 | Sensorik |
| 49 | Antennenkabel / Schlitzkabel |
| 51 | Antenne |
| 53 | Leitungskanal (el.) |
| 54 | Elektrische Leitung |
| 55 | Füllmaterial (elastisch, körnig) |
| 57 | Zentrale Steuereinheit |
| 59 | Empfangseinheit |
| 61 | Spulenanordnung |
| 63 | Sensorgehäuse |
| 64 | Verdickung , Stempel |
| 65 | Kontaktmembran |
| 67 | |
| 69 | Kontraktionsstop |
| 71 | |
| 73 | |
| 75 | |
| 90 | Marker |
| 145 | Triggersignalgeber, Piezo |
| 167 | Erster Sensor |
| 267 | Zweiter Sensor |
| 367 | Dritter Sensor |
| 467 | Vierter Sensor |
| | |

## Patentansprüche

1. Sensorvorrichtung (25) für einen Gurtförderer (1) zur Erfassung eines Zustandes von Tragrollen (7) umfassend Druck und/oder Kraftsensoren,
wobei die in einem Fördergurt (9) anordbare Sensorvorrichtung (25) einen ersten Sensor (167) und einen zweiten um 180° gedreht angeordneten Sensor (267) aufweist, wobei der erste (167) und der zweite Sensor (267) beabstandet voneinander angeordnet sind und zwischen den beiden Sensoren (167, 267) eine Verdickung (64) aus elastisch verformbarem Material, vorzugsweise gummielastischen Material, angeordnet ist, wobei die Verdickung (64) mit dem ersten (167) und dem zweiten Sensor (267) in Wirkverbindung steht und in der Verdickung (64) ein Kontraktionsstop (69) zur Verminderung einer auf die Sensoren (167, 267) wirkenden Kraft in Vertikalrichtung (15) vorgesehen ist.

2. Vorrichtung nach Anspruch 1, wobei als erster (167) und als zweiter Sensor (267) jeweils ein 2-dimensionaler Sensor (67) zur Messung einer Kraft oder eines Druckes vorgesehen ist.

3. Vorrichtung nach einem der vorherigen Ansprüche, wobei dass der erste (167) und der zweite Sensor (267) mit einer Kontaktmembran (65) in Wirkverbindung steht und elastische Verformungen durch die Sensoren (167, 267) erfasst werden, wobei vorzugsweise die Kontaktmembran (65) und die Verdickung (64) einstückig ausgebildet sind.

4. Vorrichtung nach einem der vorherigen Ansprüche, wobei zu dem ersten (167) und zweiten Sensor (267) mindestens ein um 90° versetzt angeordneter dritter Sensor (367) zur Aufnahme von einer Querkraft, einer in Richtung der Gurtbreite wirkenden Kraft, vorgesehen ist.

5. Vorrichtung nach einem der vorherigen Ansprüche, wobei ein dritter (367) und vierter Sensor (467), ein Sensorpaar bildend, zur Erfassung von Querkräften vorgesehen ist.

6. Vorrichtung nach einem der vorhergehenden Ansprüche wobei eine Spulenanordnung (61) zur Erfassung von ferromagnetischen Material, insbesondere Tragrollen (7) aus Edelstahl, vorgesehen ist.

7. Fördergurt für einen Gurtförderer für die Beförderung von Schüttgut wobei über die Gurtbreite (10) des Fördergurtes (9) eine Mehrzahl von Sensorvorrichtungen (25) nach einem der Ansprüche 1 bis 6 vorgesehen ist.

8. Fördergurt nach Anspruch 7, wobei mehrere Sensorpaare (167) und (267) über die Gurtbreite (10) verteilt für eine Detektion eines Mantelverschleißes von Tragrollen (7) angeordnet sind, so dass für die jeweilige Tragrolle (7) mindestens zwei Druck- und/oder Kraftsignale erzeugt werden, die zu seitlich über die Gurtbreite (10) versetzten Kontaktzonen der jeweiligen Tragrolle gehören.

9. Fördergurt nach Anspruch 7 oder Anspruch 8, wobei in dem Fördergurt (9) als Energy Harvesting Einheit (20) eine Schlauchpumpe (21) mit zugeordneter Turbine (33) und Generator (35) und einem Akkumulator (41) vorgesehen ist, wobei vorzugsweise ein Energie Management Controller (43) für eine Regelung einer Energieversorgung und/oder Betriebszeiten vorgesehen ist.

10. Fördergurt nach einem der vorhergehenden Ansprüche 7 bis 9, wobei die in dem Fördergurt (9) elektrische Verbindungen (54) vorgesehen sind, wobei die elektrischen Leitungen in dem Gurt in Leitungskanälen (53) ohne feste Verbindung zum Gurtmaterial verlegt sind, wobei vorzugsweise in den Leitungskanälen (53) ein Füllmaterial (55) vorgesehen ist.

11. Fördergurt nach einem der vorhergehenden Ansprüche 7 bis 10, wobei in dem Fördergurt (9) zumindestens ein Triggersignalgeber, vorzugsweise eine in Querrichtung zu den Gurtkanten (13) angeordnete Piezoleitung, vorgesehen ist.

12. Gurtförderer (1) für Schüttgut mit einem zwischen Umlenkstationen (5) endlos umlaufenden flexiblen Fördergurt (9), wobei der Fördergurt durch Tragrollen (7) abgestützt ist und wobei der Fördergurt (9) oder ein Teilstück des Fördergurtes mindestens eine Sensorvorrichtung (25) nach einem der Ansprüche 1 bis 6 aufweist, wobei für eine Datenübertragung ein Schlitzkabel (49) als Antenne entlang der Förderstrecke des Gurtförderers (1) für eine Datenübertragung vorgesehen ist, wobei vorzugsweise pro Kilometer Gurtweg mindestens 7,5 Meter Schlitzkabel (49) vorgesehen ist.

13. Gurtförderer nach Anspruch 12, wobei Marker an mehreren Positionen des Gurtförderers zur Markierung von bekannten Positionen vorgesehen sind.

14. Verfahren eines Förderbetriebes eines Gurtförderers (1) nach einem der Ansprüche 12 oder 13, mit den folgenden Schritten:
- Steuerung eines Betriebes einer Datenerfassung durch die Sensorvorrichtungen (25) in dem Fördergurt (9) in Abhängigkeit von einem Speicherzustand eines Akkumulators (41) , wobei eine Datenerfassung erst gestartet wird, wenn der Ladungszustand des Akkumulators (41) ausreichend ist, um die Datenerfassung und Übertragung der Daten eines vollständigen Umlaufes des Fördergurtes (9) sicherzustellen
- Erfassung von Schubspannungen beim Passieren von Tragrollen (7) und versehen dieser Daten mit einem Zeitwert
- Erfassen von vorbestimmten Positionen (90) mit einem Zeitwert
- Übertragen der Daten über eine ortsfest angeordnete Empfangseinheit (59) und Zuleitung zu einer zentralen Steuereinheit (57)
- Ermittlung von Tragrollenzuständen unter Verwendung von Zeit- und Positionsdaten.

## Claims

1. Sensor apparatus (25) for a belt conveyor (1) for detecting a state of load-bearing rollers (7), comprising pressure and/or force sensors, wherein the sensor apparatus (25), which can be arranged in a conveyor belt (9), has a first sensor (167) and a second sensor (267) arranged rotated through 180°, wherein the first sensor (167) and the second sensor (267) are arranged spaced apart from each other and a thickened portion (64) composed of elastically deformable material, preferably rubber-elastic material, is arranged between the two sensors (167, 267), wherein the thickened portion (64) is operatively connected to the first sensor (167) and the second sensor (267), and a contraction stop (69) for reducing a force acting on the sensors (167, 267) in the vertical direction (15) is provided in the thickened portion (64).

2. Apparatus according to Claim 1, wherein a respective two-dimensional sensor (67) for measuring a force or a pressure is provided as the first sensor (167) and as the second sensor (267).

3. Apparatus according to either of the preceding claims, wherein the first sensor (167) and the second sensor (267) are operatively connected to a contact membrane (65) and elastic deformations are detected by the sensors (167, 267), wherein the contact membrane (65) and the thickened portion (64) are preferably formed in one piece.

4. Apparatus according to any of the preceding claims, wherein at least a third sensor (367), which is arranged offset through 90° to the first sensor (167) and the second sensor (267), is provided for recording a transverse force, a force acting in the direction of the belt width.

5. Apparatus according to any of the preceding claims, wherein a third sensor (367) and a fourth sensor (467), which form a pair of sensors, for detecting transverse forces are provided.

6. Apparatus according to any of the preceding claims, wherein a coil arrangement (61) for detecting ferromagnetic material, in particular load-bearing rollers (7) composed of high-grade steel, is provided.

7. Conveyor belt for a belt conveyor for conveying bulk material, wherein a plurality of sensor apparatuses (25) according to any of Claims 1 to 6 are provided over the belt width (10) of the conveyor belt (9).

8. Conveyor belt according to Claim 7, wherein a plurality of pairs of sensors (167) and (267) are arranged distributed over the belt width (10) for detecting casing wear of load-bearing rollers (7), so that at least two pressure and/or force signals are generated for the respective load-bearing roller (7), the signals belonging to contact zones of the respective load-bearing roller which are offset laterally over the belt width (10).

9. Conveyor belt according to Claim 7 or Claim 8, wherein a hose pump (21) with an associated turbine (33) and generator (35) and with a rechargeable battery (41) is provided in the conveyor belt (9) as an energy harvesting unit (20), wherein an energy management controller (43) for controlling a supply of power and/or operating times is preferably provided.

10. Conveyor belt according to any of the preceding Claims 7 to 9, wherein the electrical connections (54) are provided in the conveyor belt (9), wherein the electrical cables are laid in the belt in cable ducts (53) without a fixed connection to the belt material, wherein a filler material (55) is preferably provided in the cable ducts (53).

11. Conveyor belt according to any of the preceding Claims 7 to 10, wherein at least one trigger signal emitter, preferably a piezo cable arranged in the transverse direction in relation to the belt edges (13), is provided in the conveyor belt (9).

12. Belt conveyor (1) for bulk material, comprising a flexible conveyor belt (9) which circulates continuously between diverting stations (5), wherein the conveyor belt is supported by load-bearing rollers (7), and wherein the conveyor belt (9) or a subsection of the conveyor belt has at least one sensor apparatus (25) according to any of Claims 1 to 6, wherein, for data transfer, a leaky feeder (49) is provided as an antenna along the conveying path of the belt conveyor (1) for data transfer, wherein at least 7.5 m of leaky feeder (49) is preferably provided per kilometre of belt travel.

13. Belt conveyor according to Claim 12, wherein markers are provided at several positions on the belt conveyor for marking known positions.

14. Method for conveying operation of a belt conveyor (1) according to either of Claims 12 and 13, comprising the following steps:
- controlling operation of data capture by the sensor apparatuses (25) in the conveyor belt (9) depending on a storage state of a rechargeable battery (41), wherein data capture is started only when the state of charge of the rechargeable battery (41) is enough to ensure data capture and transfer of the data for a full revolution of the conveyor belt (9),
- detecting shear stresses when passing load-bearing rollers (7) and providing this data with a time value,
- detecting predetermined positions (90) with a time value,
- transferring the data via a stationary receiver unit (59) and feeding the data to a central control unit (57),
- ascertaining load-bearing roller states using time and position data.

## Revendications

1. Appareil de détection (25) pour un convoyeur à courroie (1) pour la détection d'un état de rouleaux (7) porteurs de charge, comprenant des capteurs de pression et/ou de force, l'appareil de détection (25) étant apte à être agencé dans une courroie de transport (9) présentant un premier capteur (167) et un deuxième capteur (267) agencé en étant tourné de 180°, le premier capteur (167) et le deuxième capteur (267) étant agencés à distance l'un de l'autre, et entre les deux capteurs (167, 267) est agencé un épaississement (64) en matériau élastiquement déformable, de préférence en matériau élastique caoutchouteux, l'épaississement (64) étant en liaison fonctionnelle avec le premier capteur (167) et le deuxième capteur (267) et un arrêt de contraction (69) étant prévu dans l'épaississement (64) pour réduire une force agissant sur les capteurs (167, 267) dans la direction verticale (15).

2. Appareil selon la revendication 1, dans lequel il est prévu comme premier capteur (167) et comme deuxième capteur (267) respectivement un capteur bidimensionnel (67) pour mesurer une force ou une pression.

3. Appareil selon l'une des revendications précédentes, dans lequel le premier capteur (167) et le deuxième capteur (267) sont en liaison fonctionnelle avec une membrane de contact (65) et des déformations élastiques sont détectées par les capteurs (167, 267), la membrane de contact (65) et l'épaississement (64) étant de préférence formés d'une seule pièce.

4. Appareil selon l'une des revendications précédentes, dans lequel il est prévu au moins un troisième capteur (367) décalé de 90° par rapport au premier capteur (167) et au deuxième capteur (267) pour l'enregistrement d'une force transversale, une force agissant dans le sens de la largeur de la courroie.

5. Appareil selon l'une des revendications précédentes, dans lequel un troisième capteur (367) et un quatrième capteur (467), formant une paire de capteurs, sont prévus pour détecter des forces transversales.

6. Appareil selon l'une des revendications précédentes, dans lequel un agencement de bobines (61) est prévu pour la détection de matériau ferromagnétique, en particulier de rouleaux (7) porteurs de charge en acier inoxydable.

7. Courroie de transport pour un convoyeur à courroie pour le transport de produits en vrac, dans laquelle une pluralité de dispositifs de détection (25) selon l'une des revendications 1 à 6 est prévue sur la largeur (10) de la courroie de transport (9).

8. Courroie de transport selon la revendication 7, dans laquelle plusieurs paires de capteurs (167) et (267) sont réparties sur la largeur (10) de la courroie pour une détection d'une usure de l'enveloppe des rouleaux (7) porteurs de charge, de sorte que pour le rouleau (7) porteur de charge respectif, au moins deux signaux de pression et/ou de force sont générés, qui appartiennent à des zones de contact du rouleau porteur respectif, décalées latéralement sur la largeur (10) de la courroie.

9. Courroie de transport selon la revendication 7 ou la revendication 8, dans laquelle une pompe péristaltique (21) avec une turbine (33) et un générateur (35) associés et un accumulateur (41) sont prévus dans la courroie de transport (9) en tant qu'unité (20) de récolte d'énergie, un contrôleur (43) de gestion d'énergie étant de préférence prévu pour une régulation d'une alimentation en énergie et/ou des temps de fonctionnement.

10. Courroie de transport selon l'une des revendications précédentes 7 à 9, dans laquelle les connexions électriques (54) sont prévues dans la courroie de transport (9), les lignes électriques étant posées dans la courroie dans des canaux conducteurs (53) sans liaison fixe avec le matériau de la courroie, un matériau de remplissage (55) étant de préférence prévu dans les canaux conducteurs (53).

11. Courroie de transport selon l'une des revendications précédentes 7 à 10, dans laquelle il est prévu dans la courroie de transport (9) au moins un générateur de signaux de déclenchement, de préférence une ligne piézo-électrique agencée dans le sens transversal par rapport aux bords (13) de la courroie.

12. Convoyeur à courroie (1) pour produits en vrac avec une courroie de transport (9) flexible circulant sans fin entre des stations de renvoi (5), la courroie de transport étant soutenue par des rouleaux (7) porteurs de charge et la courroie de transport (9) ou un tronçon de la courroie de transport présentant au moins un appareil de détection (25) selon l'une des revendications 1 à 6 ; pour une transmission de données, il est prévu un câble fendu (49) servant d'antenne le long du trajet de transport du convoyeur à courroie (1) pour une transmission de données, de préférence au moins 7,5 mètres de câble fendu (49) étant prévus par kilomètre de trajet de courroie.

13. Convoyeur à courroie selon la revendication 12, dans lequel des marqueurs sont prévus en plusieurs positions du convoyeur à courroie pour marquer des positions connues.

14. Procédé de fonctionnement d'un convoyeur à courroie (1) selon l'une des revendications 12 ou 13, comprenant les étapes suivantes :
- commander un fonctionnement d'une acquisition de données par les dispositifs de détection (25) dans la courroie de transport (9) en fonction d'un état de stockage d'un accumulateur (41), une acquisition de données n'étant lancée que lorsque l'état de charge de l'accumulateur (41) est suffisant, pour assurer la saisie et la transmission des données d'une rotation complète de la courroie de transport (9),
- détection de contraintes de cisaillement lors du passage de rouleaux (7) porteurs de charge et attribution d'une valeur temporelle à ces données,
- détecter des positions prédéterminées (90) avec une valeur temporelle,
- transmettre vers une unité de commande centrale (57) des données par l'intermédiaire d'une unité de réception (59) agencée de manière fixe et d'une ligne d'alimentation,
- déterminer des états des rouleaux porteurs de charge en utilisant des données temporelles et de position.
